Europäisches Patentamt

European Patent Office

Office européen des brevets

(11) Numéro de publication: **0 211 699**
**B1**

(12) **FASCICULE DE BREVET EUROPEEN**

(45) Date de publication du fascicule du brevet: **08.08.90**

(51) Int. Cl.⁵: **F 23 L 15/04, F 23 D 14/66**

(21) Numéro de dépôt: **86401186.1**

(22) Date de dépôt: **03.06.86**

(54) **Bru7leur avec des caloducs pour le préchauffage de l'air et du combustible.**

(30) Priorité: **10.06.85 FR 8508750**

(43) Date de publication de la demande:
**25.02.87 Bulletin 87/09**

(45) Mention de la délivrance du brevet:
**08.08.90 Bulletin 90/32**

(84) Etats contractants désignés:
**AT BE CH DE GB IT LI LU NL SE**

(56) Documents cités:
**EP-A-0 039 762**
**EP-A-0 129 257**
**FR-A-1 210 907**
**FR-A-1 587 944**
**FR-A-2 420 734**
**GB-A-2 076 134**
**US-A-3 163 202**

**P. Dunn et D.A. Reay, Heat pipes, second edition,
Pergamon Press**

**J.L. Roth, La combustion du gaz de haut
fourneau dopé, IRSID, janvier 1985**

(73) Titulaire: **SOCIETE FRANCAISE d'ETUDES
d'INSTALLATIONS SIDERURGIQUES
(S.O.F.R.E.S.I.D.)
59, rue de la République
F-93108 Montreuil Cedex (FR)**

(72) Inventeur: **Dhelft, Patrick
33, rue Briante
F-77200 Torcy (FR)**

(74) Mandataire: **Armengaud Ainé, Alain
Cabinet ARMENGAUD AINE 3 Avenue Bugeaud
F-75116 Paris (FR)**

## Description

Cette invention a pour objet un brûleurs auto-récupérateur.

On sait que, dans de nombreuses applications industrielles, on utilise des brûleurs alimentés par divers combustibles: solides, liquides ou gazeux, présentant un pouvoir calorifique plus ou moins élevé. Le comburant est de l'air atmosphérique, généralement surpressé, et éventuellement enrichi en oxygène.

Pour certaines applications, les fumées sont épuisées plus ou moins complètement par un contre-courant réel ou fictif, dans le cas des régénérateurs (chaudières, fours à ciment, cowpers).

Il est aussi fréquent que le brûleur assure le chauffage d'une enceinte à partir de laquelle les produits de la combustion s'échappent à haute température. Ce cas est typique de nombreux fours de réchauffage et de fusion (fours pits, fours potoyer, fours tunnels, réchauffeurs de poches, etc.).

Le rendement de ces brûleurs est d'autant plus faible que la température requise par le procédé est élevée. Par ailleurs, cette élévation de la température de combustion nécessite l'utilisation de combustible à fort pouvoir calorifique.

Pour améliorer le rendement, on a créé des brûleurs dits "brûleurs auto-récupérateurs", qui comportent une veine annulaire extérieure, concentrique au brûleur, au travers de laquelle les gaz de combustion passent avant leur évacuation vers l'atmosphère. On trouve des exemples de cette technique connue de brûleurs auto-récupérateurs comportant des moyens de conduction thermique entre les gaz de combustion et l'air comburant dans US-A-3 163 202 et EP-A-0 039 762. Ainsi, une partie de l'énergie calorifique contenue dans les gaz de combustion peut être récupérée et transmise généralement à l'air comburant.

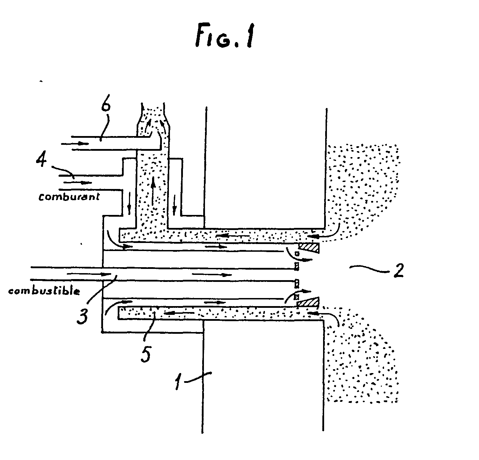

Sur la figure 1 des dessins annexés, on a représenté un brûleur auto-récupérateur de ce type.

On voit sur cette figure 1 le brûleur positionné au travers de la paroi du four 2, ce brûleur étant alimenté en combustible, par exemple gazeux, par une conduite 3, et en air comburant par une conduite 4. Comme on l'a mentionné ci-dessus, le brûleur comporte une veine annulaire extérieure 5, concentrique au brûleur, dans laquelle circulent les gaz de combustion, la circulation étant obtenue par un flux d'air éducteur admis par une conduite 6.

Ce dispositif connu permet effectivement de transmettre à l'air comburant une partie de la chaleur contenue dans les gaz de combustion; cependant, la surface de contact air comburant-gaz de combustion est faible, et le rendement reste modéré, bien que l'on travaille avec des fumées très chaudes dont le rayonnement est important.

Un autre exemple d'application plus spécifique concerne les brûleurs radiants utilisés dans les fours de recuit continu à atmosphère contrôlée. Dans cette application particulière, les fumées issues de la combustion ne peuvent être libérées dans le four car elles pollueraient l'atmosphère. Elles sont donc ramenées à l'extérieur du four à l'aide d'une conduite concentrique à la conduite d'alimentation du mélange air comburant-gaz combustible, qui se trouve ainsi préchauffé. On augmente ainsi la température de combustion, et donc le rayonnement du tube fourreau.

Pour pallier le mauvais rendement de telles installations, on a envisagé de récupérer la chaleur des fumées qui quittent le four, en utilisant divers dispositifs, tels que, notamment des échangeurs métalliques à contre-courant ou à courants croisés, ou des régénérateurs céramiques à fonctionnement cyclique. Cependant, un tel système oblige à raccorder les circuits gaz de combustion, air comburant, et éventuellement gaz combustible, aux récupérateurs, en utilisant des conduits encombrants devant être calorifugés, voire briquetés. Malgré ces inconvénients, cette solution est fréquemment utilisée sur les fours de forte puissance (fours pits, fours poussants) dans lesquels les pertes thermiques seraient inacceptables, en l'absence d'un tel système.

La note diffusée en janvier 1985 par l'IRSID (Institut de Recherche de la Siderurgie) intitulée "la Combustion du gaz de haut fourneau dopé" de JL. ROTH fait le point sur l'état de la technique, à cette époque, des brûleurs auto-récupérateurs.

Par ailleurs, la publication EP-A 0 039 762 décrit un brûleur autorécupérateur comportant des moyens de conduction thermique entre les gaz de combustion et l'air comburant réalisés sous la forme d'ailettes.

L'expérience a montré que ces brûleurs connus ont un faible rendement en raison notamment d'une surface de contact insuffisante pour chauffer par convection l'air comburant et le combustible.

Cette invention se propose d'ameliorer les brûleurs auto-récupérateurs, de façon à éliminer les inconvénients des solutions connues decrites ci-dessus, en utilisant des caloducs pour assurer le transfert de la chaleur entre les gaz de combustion et l'air comburant, et le combustible alimentant le brûleur.

En conséquence, la présente invention a pour objet un brûleur auto-récupérateur caractérisé par l'utilisation de caloducs pour assurer le réchauffage de l'air comburant et du combustible en récupérant la chaleur sensible des fumées, et en ce que:

les caloducs sont incorporés directement dans le brûleur et ils sont placés perpendiculairement au sens de l'écoulement des fluides, dans la veine de circulation des fumées, dans la veine de circulation de l'air comburant et dans la conduite d'alimentation en combustible et,

les caloducs sont munis d'ailettes perpendiculaires aux caloducs et parallèles au sens de l'écoulement des flux, lesdites ailettes occupant la totalité des sections droites longitudinales desdites veines, et de ladite conduite, dans le brûleur.

D'autres caractéristiques et avantages de cette invention ressortiront de la description faite ci-après en référence aux dessins, qui en illustrent deux exemples de réalisation dépourvus de tout caractère limitatif. Sur les dessins:

la figure 1 est une vue schématique, en coupe longitudinale, d'un brûleur auto-récuperateur de type connu, decrit ci-dessus;

les figures 2 et 3 sont, respectivement, des vues en coupe horizontale et transversale d'un brûleur auto-récupérateur selon l'invention du type à préchauffage d'air comburant et gaz combustible préchauffé.

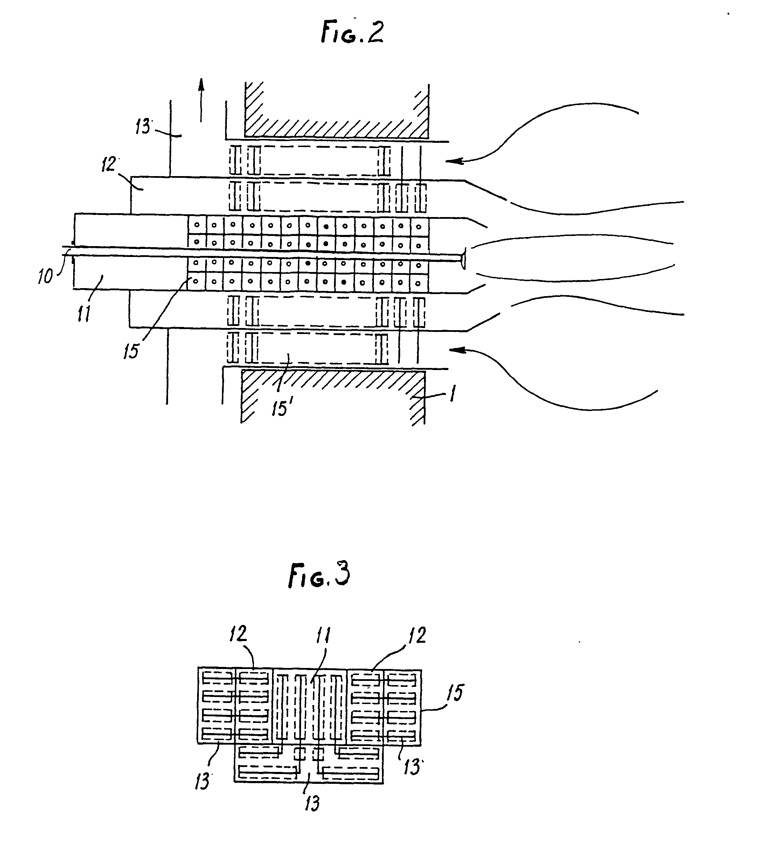

Les figures 2 et 3 illustrent un exemple de réalisation de l'invention, qui vise un brûleur auto-récupérateur à gaz pauvre, avec préchauffage de l'air comburant et du gaz combustible.

Sur ces figures, on voit, en 10, la conduite d'alimentation du brûleur en combustible liquide ou gazeux, et, en 11, le conduit d'admission de l'air comburant au brûleur. Les produits de la combustion (fumées chaudes) sont évacuées par la conduite 13, après passage au travers de veines 12, concentriques à la conduite d'admission d'air 11.

Dans cette réalisation, on utilise des caloducs 15 pour assurer l'échange thermique entre les gaz de combustion et le gaz combustible pauvre, et des caloducs 15' pour effectuer le transfert thermique entre ces gaz de combustion et l'air comburant.

Grâce à cette caractéristique, on a augmenté sensiblement la surface d'échange, et on a réalisé un échange convectif en complément de l'échange par rayonnement. On peut ainsi obtenir un taux de récuperation très important.

On peut, sans sortir du cadre de cette invention, envisager diverses variantes, parmi lesquelles on citera:

a) une suroxygénation de l'air comburant délivré au brûleur;

b) la disposition d'ailettes sur tout ou partie des caloducs, en fonction de la température des fumées;

c) l'utilisation de caloducs de même nature sur toute la longueur de l'echangeur;

d) l'utilisation de caloducs de nature différente, pour s'adapter à la température des fumées le long de l'échangeur;

e) réalisation d'un contrôle de débit des fumées traversant l'échangeur;

f) contrôle de la température d'admission des fumées dans l'échangeur, par dilution à l'air de celles-ci;

g) contrôle de la température d'admission des fumées dans l'échangeur, par dilution à l'aide d'air de fumées froides recyclees.

**Revendications**

1. Brûleur auto-récupérateur caractérisé par l'utilisation de caloducs pour assurer le réchauffage de l'air comburant et du combustible en récupérant la chaleur sensible des fumées, et en ce que:

les caloducs (14, 15, 15') sont incorporés directement dans le brûleur, et ils sont places perpendiculairement au sens de l'ecoulement des fluides, dans la veine (12) de circulation des fumees, dans la veine (11) de circulation de l'air comburant et dans la conduite (10) d'alimentation en combustible et,

lesdits caloducs sont munis d'ailettes perpendiculaires aux caloducs et parallèles au sens de l'écoulement des flux, lesdites ailettes occupant la totalité des sections droites longitudinales desdites veines (11, 12) et de ladite conduite (10) dans le brûleur.

2. Brûleur selon la revendication 1 caractérisé en ce que les caloducs sont de même nature sur toute la longueur de l'échangeur.

3. Brûleur selon la revendication 1 caractérisé en ce que les caloducs sont de natures différentes, pour s'adapter à la temperature des fumées tout le long de l'échangeur.

4. Brûleur selon l'une quelconque des revendications précédentes caractérise en ce que le débit des fumées traversant les caloducs est contrôle.

5. Brûleur selon l'une quelconque des revendications précédentes caractérisé en ce que la température d'admission des fumées dans les caloducs est contrôlée par dilution à l'aide d'air.

6. Brûleur selon quelconque des revendications 1 à 4, caractérisé en ce que la température d'admission des fumées dans les caloducs est contrôlée par dilution des fumées froides recyclées.

**Patentansprüche**

1. Brenner mit Eigenwärmerückgewinnung, gekennzeichnet durch die Verwendung von Wärmetauscherrohren zur Erwärmung der Verbrennungsluft und des Brennstoffes, wobei die freie Wärme der Rauchgase wiedergewonnen wird, und dadurch gekennzeichnet, daß die Wärmetauscherrohre (14, 15, 15') direkt im Brenner angeordnet sind und senkrecht zur Strömungsrichtung der Fluide im Rohr (12) zur Zirkulation der Rauchgase, im Rohr (11) zur Zirkulation der Verbrennungsluft und in der Versorgungsleitung (10) für den Brennstoff verlaufen und daß die Wärmetauscherrohre senkrecht zu den Wärmetauscherrohren und parallel zur Richtung der Strömung verlaufende Rippen aufweisen, die im Brenner den gesamten Längsschnitt der Rohre (11, 12) und der Leitung (10) hinnehmen.

2. Brenner nach Anspruch 1, dadurch gekennzeichnet, daß die Wärmetauscherrohre über die ganze Länge des Wärmetauschers von gleicher Beschaffenheit sind.

3. Brenner nach Anspruch 1, dadurch gekennzeichnet, daß die Wärmetauscherrohre verschieden beschaffen sind, um sich der Temperatur der Rauchgase entlang des Wärmetauschers anzupassen.

4. Brenner nach einem der vorstehenden Ansprüche, dadurch gekennzeichnet, daß der Durchfluß der die Wärmetauscherrohre durchströmenden Rauchgase geregelt wird.

5. Brenner nach einem der vorstehenden Ansprüche, dadurch gekennzeichnet, daß die Eintrittstemperatur der Rauchgase in die Wärmetauscherrohre durch die Zumischung von Luft geregelt wird.

6. Brenner nach einem der Ansprüche 1 bis 4, dadurch gekennzeichnet, daß die Eintrittstemperatur der Rauchgase in die Wärmetauscherrohre durch die Zumischung kalter wiedergewonnener Rauchgase geregelt wird.

**Claims**

1. Self-recuperator burner, characterized by the use of heat pipes for assuring heating of the combustion air and of the fuel by recovering the sensible heat of the smoke gases, and in that:

the heat pipes (14, 15, 15') are incorporated directly in the burner, and they are placed perpendicularly to the direction of flow of the fluids, in the duct (12) for circulation of the smoke gases, in the duct (11) for circulation of the combustion air and in the feed pipe (10) for fuel and,

said heat pipes are equipped with fins perpendicular to tbe heat pipes and parallel to the direction of flow of the fluids, said fins occupying the entirety of the longitudinal cross-sections of said ducts (11, 12) and of ssid pipe (10) in the burner.

2. Burner according to Claim 1, characterized in that the heat pipes are of the same nature throughbout the length of the exchanger.

3. Burner according to Claim 1, characterized in that the heat pipes are of different natures, in order to adapt to the temperature of the smoke gases throughout the length of the exchanger.

4. Burner according to any one of the preceding Claims, characterized in that the flow rate of the smoke gases passing througb the heat pipes is controlled.

5. Burner according to any one of the preceding Claims, characterized in that the inlet temperature of the smoke gases into the heat pipes is controlled by dilution with air.

6. Burner according to any one of Claims 1 to 4, characterized in that the inlet temperature of the smoke gases into the heat pipes is controlled by dilution of the recycled cold smoke gases.

EP 0 211 699 B1

# Fig. 1

Figure labels: 6, 4, comburant, combustible, 3, 5, 1, 2

## Fig.2

## Fig.3